**Europäisches Patentamt**

**European Patent Office**

**Office européen des brevets**

(19)

(11) Veröffentlichungsnummer: **0 009 604**
A2

(12) **EUROPÄISCHE PATENTANMELDUNG**

(21) Anmeldenummer: 79103103.2

(22) Anmeldetag: 23.08.79

(51) Int. Cl.³: **H 01 S 3/045**
**H 01 S 3/03**

(30) Priorität: 09.10.78 CH 10453/78

(43) Veröffentlichungstag der Anmeldung:
16.04.80 Patentblatt 80/8

(84) Benannte Vertragsstaaten:
DE FR GB

(71) Anmelder: **International Business Machines
Corporation**

**Armonk, N.Y. 10504(US)**

(72) Erfinder: **Haupt, Emil
Eggstrasse 85
CH-8803 Rüschlikon/ZH(CH)**

(72) Erfinder: **Irniger, Viktor
Säntisstrasse 17
CH-8805 Richterswil/ZH(CH)**

(72) Erfinder: **Pohl, Dieter Wolfgang
Felsenhofstrasse 10
CH-8134 Adliswil/ZH(CH)**

(74) Vertreter: **Meyer, Rolf, Dipl.-Phys.
Säumerstrasse 4
CH-8803 Rüschlikon/ZH(CH)**

(54) **Entladungsgefäss für Gaslaser.**

(57) Ein gläsernes Entladungsgefäss für einen kryogenischen Gaslaser besteht praktisch aus drei konzentrischen Rohren. Der innere Entladungsraum ist mit einem Kühlmantel für flüssigen Stickstoff umgeben, der nach aussen mit einem Vakuummantel isoliert ist. Zum Ausgleich thermischer Spannungen im Gefäss enthält der Aussenmantel elastisch deformierbare Abschnitte. Gruppen von balgenartigen Rohrfederelementen kompensieren die Längenkontraktion des Zwischenrohrs bezüglich des Aussenrohrs.

FIG. 5

EP 0 009 604 A2

Croydon Printing Company Ltd.

0009604

SZ 9-78-004

- i -

ENTLADUNGSGEFAESS FUER GASLASER

Die Erfindung betrifft ein gläsernes Entladungsgefäss für einen bei tiefen Temperaturen arbeitenden Gaslaser. Das innere Entladungsrohr ist mit einem Kühlmittelmantel umgeben. Für die thermische Isolation ist weiterhin ein äusserer Vakuummantel vorgesehen. Das Entladungsgefäss besitzt Fenster zum Durchtritt der Laserstrahlung. Weiter sind an dem Gefäss seitliche Durchführungen vorgesehen für Anschlüsse der Versorgung des Lasers mit gasförmigen laseraktiven Medien, mit flüssigen Kühlmitteln und mit elektrischer Energie.

Gasentladungslaser arbeiten mit elektrischer Stossanregung von Molekülen oder Atomen verdünnter Gase. Dabei werden meist Schwingungsübergänge bzw. Banden von Rotations-Schwingungsübergängen angeregt. Die stimulierte Emission erfolgt vornehmlich im ultraroten Spektralbereich. Beispielsweise strahlt ein $CO_2$-Laser im Wellenlängenbereich um 10 $\mu$m. Ein Beispiel eines im Wellenlängenbereich um etwa 5 $\mu$m emittierenden Gaslasers ist der Kohlenmonoxidlaser. Die beste Ausbeute erzielt man mit einem CO-Laser bei tiefen Temperaturen, wenn der Entladungsraum und seine Wände sehr stark abgekühlt sind.

- 2 -

Die bisher bekannten Molekulargaslaser wie beispielsweise die CO-Laser sind meist aufwendige Laboratoriumsaufbauten. Denn es müssen Vorkehrungen getroffen werden, dass das eigentliche Entladungsrohr mindestens teilweise mit einem Kühlmantel umgeben ist. Die flüssigen Kühlmittel müssen zugeführt bzw. durchgeleitet werden können. Weiterhin müssen Anschlüsse zum Durchleiten der gasförmigen laseraktiven Medien durch den Entladungsraum vorgesehen sein. Hochspannungseinrichtungen müssen durchschlagsicher mit im Gefäss angeordneten Elektroden verbunden werden. Und weil diese Elektroden Abnutzungserscheinungen unterliegen, müssen sie für Reinigungszwecke oder zum Austausch leicht zugänglich sein. Alle diese Anschlüsse müssen mit dem Kühlmittelmantel verträglich sein, weshalb man meist nur Abschnitte des eigentlichen Entladungsrohres mit einem Kühlmantel umgibt. Als flüssiges Kühlmittel wird gewöhnlich Wasser verwendet. Bei tiefen Temperaturen verwendet man jedoch verflüssigte Gase wie flüssigen Stickstoff. Dann ist eine zusätzliche Wärmeisolation erforderlich. Man verwendet dafür z.B. eine Schaumstoffverkleidung oder einen Isoliermantel.

Aufbauten bekannter Gasentladungslaser sind daher meist zusammengesetzte Konstruktionen, teilweise mit thermisch isolierenden Bauteilen in der Art eines Dewar-Gefässes. Das erfordert eine Anzahl von Metall-Glasverbindungen oder Metall-Keramikverbindungen. Solche Konstruktionen sind nicht leicht herzustellen, wenn sie zuverlässig dicht gegen flüssigen Stickstoff sein sollen. Ausserdem erschweren Metallteile im Entladungsgefäss die Isolation der Hochspannungszuführung. Ein Tieftemperatur-Gasentladungslaser mit einem äusseren, den Kühlmantel des Entladungsgefässes vollständig umgebenden, thermisch isolierenden

SZ 9-78-004

Vakuummantel ist bis jetzt noch nicht bekannt geworden.

Die US Patentschrift 3 605 038 zeigt einen Molekulargasentladungslaser, bei dem Schwingungsübergänge in Gasen wie $C_2H_2$ (Acetylen) durch $H_2$ (Wasserstoff) angeregt werden. Der dort gezeigte Aufbau der Lasereinrichtung kann als Standardbauweise angesehen werden. Das Entladungsrohr enthält nahe den Enden Elektroden, die mit einer Impulse liefernden Hochspannungsquelle verbunden sind. Die Endreflektoren des optischen Resonators sind innerhalb des evakuierten Teiles der Einrichtung untergebracht. Dank eingefügter Metallbälge sind die Reflektoren für die Abstimmung des Lasers einstellbar. Ein Kühlmantel für Wasser oder verflüssigte Gase umgibt das Entladungsrohr. Eine äussere thermische Isolation fehlt. Es ist der typische Laboratoriumsaufbau, wie er beispielsweise ähnlich in der grundlegenden Arbeit " Vibrational-Rotational Laser Action in Carbon Monoxide " von C.K.N. Patel in der Zeitschrift The Physical Review, Band 141, No 1, (Januar 1966), Seiten 71 bis 83 beschrieben ist.

Ein Beispiel eines CO-Lasers, der mit CO, Luft und He (Helium) arbeitet, ist in dem Beitrag " Q Switching of the Carbon Monoxide Laser " von R.M. Osgood, Jr, E.R. Nichols und W.C. Eppers, Jr, in Applied Physics Letters, Band 15, No 2, (15. Juli 1969), Seiten 69 bis 72 beschrieben. Die Aufbauskizze zeigt einen Laser, der unter den Bedingungen des strömenden Gases arbeitet. Die Enden des Entladungsrohrs sind mit Brewster-Fenstern für den Austritt der Laserstrahlung ausgerüstet. Die Reflektoren und der Güteschalter des optischen Resonators befinden sich ausserhalb des evakuierten Teiles der Einrichtung. Ein Kühlmantel mit flüssigem $N_2$ umgibt den Abschnitt des Entladungsrohrs zwischen den Anschlüssen für das gasförmige Lasermedium. Eine weitere, äussere thermische Isolierung ist nicht vorhanden.

Ein in der Vakuumtechnik gerne gebrauchter Werkstoff ist Glas. Es lassen sich daraus praktisch beliebig geformte Apparaturen herstellen. Auch ist Glas ein guter elektrischer Isolator, der es für die Herstellung von Entladungsgefässen geeignet macht. Aber Glas ist sehr empfindlich gegenüber mechanischen Spannungen und kann daher nicht ohne weiteres grossen Temperaturdifferenzen ausgesetzt werden. Deshalb sind vollständig aus Glas hergestellte Entladungsgefässe für bei tiefen Temperaturen arbeitende Gaslaser noch nicht bekannt geworden.

Ein gläsernes Entladungsgefäss für einen bei Raumtemperatur arbeitenden Gaslaser ist durch den Beitrag " Sealed CO Laser at Room Temperature " der Verfasser H.J. Seguin, J. Tulip und B. White in der Zeitschrift Canadian Journal of Physics, Band 49, (1971), Seiten 2731, 2732 bekannt geworden. Der beschriebene CO-Laser kann über grössere Zeiträume als praktisch geschlossenes System arbeiten, zumindest,was das gasförmige laseraktive Medium betrifft. Das Kühlmittel Wasser muss allerdings laufend zugeführt werden. Das Entladungsgefäss enthält ein inneres Rohr als den eigentlichen Entladungsraum. Ein konzentrisches Rohr bildet den Kühlmantel. Ein drittes Rohr umschliesst die Vorrichtung und begrenzt ein mit dem Entladungsraum kommunizierendes Puffergefäss. Dieses für die abgeschlossene Arbeitsweise notwendige Gasreservoir grenzt an die andere Seite des Kühlmantels an. Die Entladungsstrecke ist in zwei hintereinandergeschaltete Abschnitte aufgeteilt. An den Enden des Entladungsgefässes befindet sich je eine Anode. Eine zentrale gemeinsame Kathode ist seitlich in der Mitte des Gefässes angebracht. Der Entladungsraum ist an seinen Enden mit Brewster-Fenstern abgeschlossen. Die Reflektoren des optischen Resonators befinden sich ausserhalb des Vakuums.

Der Aufbau des bekannten Systems besteht praktisch völlig aus Glas. Die Elektroden befinden sich in seitlich einmündenden Durchführungen. Auch der Zufluss und der Abfluss des Kühlwassers erfolgt durch seitlich einmündende Leitungen. Das gläserne Entladungsgefäss besteht im wesentlichen aus drei konzentrischen Rohren. Für die Anschlüsse der Versorgung des Lasers mit Betriebsmitteln, Kühlmitteln und Energie sind seitliche Durchführungen vorhanden, welche je nach ihrem Zweck eine oder mehrere Rohrwände durchsetzen. Diese Bauweise ist in Glasbläsertechnik leicht herstellbar. Schwierigkeiten wegen etwaiger zu grosser thermischer Beanspruchung der Konstruktion sind nicht zu befürchten. Weil der bekannte Laser nur bei Raumtemperatur betrieben wird, treten keine gefährlichen Temperaturdifferenzen auf.

Ganz anders liegen die Verhältnisse, wenn ein Gasentladungslaser bei tiefen Temperaturen betrieben werden soll. Dann werden als Kühlmittel verflüssigte Gase verwendet wie beispielsweise flüssiger Stickstoff. Es treten dabei erhebliche Temperaturdifferenzen und damit auch thermische Spannungen in der Apparatur auf. Robuste labormässige Konstruktionen in Gemischt-Bauweise mit Metall, Keramik und Glas sind in der Lage, die auftretenden mechanischen Spannungen zu beherrschen. Solche Probleme treten insbesondere an den Durchführungen auf. Deshalb vermeidet man nach Möglichkeit bisher die Anordnung von Durchführungen, welche mehrere Rohrwände und damit Gebiete unterschiedlicher Temperaturen durchsetzen.Kühlmäntel sind meist nur in glatten, mittleren Abschnitten des Entladungsrohrs vorgesehen, während Durchführungen für Versorgungsleitungen an den Enden des Entladungsrohrs einmünden, ohne durch einen Kühlmantel behindert zu sein.

Völlig aus Glas hergestellte Entladungsgefässe sind deshalb für kryogenische Gasentladunglaser bisher unbekannt.

Es ist eine Aufgabe der Erfindung, ein gläsernes Entladungsgefäss für einen bei tiefen Temperaturen arbeitenden Gaslaser zu schaffen, bei dem das Problem der thermischen Spannungen gelöst ist. Damit wird ein einfaches, handliches Gerät geschaffen, mit dem leicht zu arbeiten ist.

Gemäss der Erfindung ist das gläserne Entladungsgefäss für einen bei tiefen Temperaturen arbeitenden Gaslaser der eingangs genannten Art dadurch gekennzeichnet, dass der Kühlmittelmantel mit einem thermisch isolierenden Vakuummantel umgeben ist und dass die äussere gläserne Wand des Vakuummantels mit elastisch deformierbaren Abschnitten zum Ausgleich thermischer Spannungen versehen ist. Weitere Merkmale sind in den Patentansprüchen definiert.

Diese Ausbildung des Entladungsgefässes hat viele Vorteile. Das völlig in Glasbläsertechnik hergestellte Gefäss ohne Metall- Glasverbindungen oder Keramik- Glasverbindungen ist mit Sicherheit vakuumdicht und auch dicht gegen flüssigen Stickstoff herstellbar. Es ist leicht zu reinigen. Nur drei gläserne Schliff-Verbindungen sind erforderlich, um dies ebenso leicht zu ermöglichen wie gegebenenfalls den Zugang zu dem Verschleiss unterliegenden Bauteilen wie den Hochspannungselektroden. Auch sind die Brewster-Fenster zum Auskoppeln der Laserstrahlung mittels der gleichen Schliff-Verbindungen in der Orientierung einstellbar eingerichtet. Das Entladungsgefäss ist eine kompakte Apparatur, die leicht zu handhaben ist und auch gegebenenfalls den Betrieb als abgeschlossenes System ermöglicht.

- 7 -

Die Erfindung wird im folgenden anhand von Ausführungsbeispielen mit Hilfe der Zeichnungen näher beschrieben.

Fig. 1     zeigt eine geschnittene schematische Uebersicht eines Entladungsgefässes nach der Erfindung.

Fig. 2     zeigt ein Beispiel einer Gruppe von Rohrfederelementen.

Fig. 3     ist die Darstellung des anodenseitigen Endes eines Entladungsgefässes.

Fig. 4     stellt einen mittleren Ausschnitt des Entladungsgefässes mit der Kathode dar.

Fig. 5     ist eine Gesamtübersicht eines Entladungsgefässes.

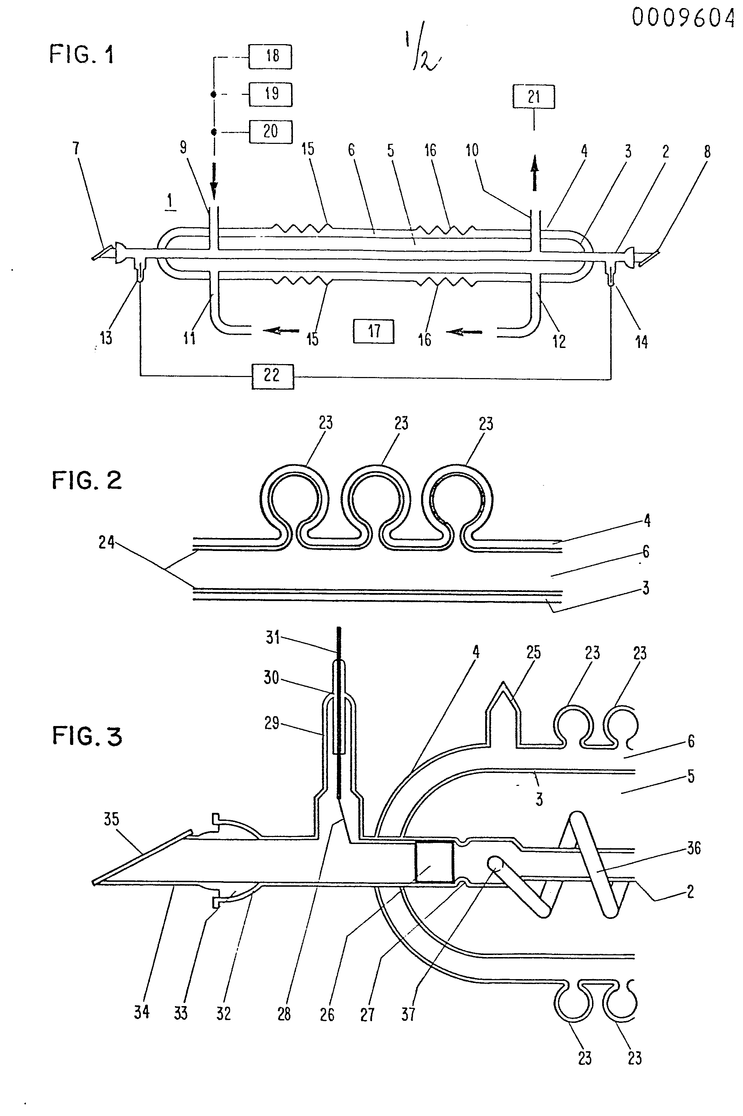

Die schematische Uebersicht der Fig. 1 zeigt im Schnitt ein gläsernes Entladungsgefäss 1, das im wesentlichen aus drei konzentrischen Rohren 2,3 und 4 besteht. Das Innenrohr 2 bildet das eigentliche Entladungsrohr und umhüllt den Entladungsraum. Das Zwischenrohr 3 trennt den Kühlmittelmantel 5 von dem thermisch isolierenden Vakuummantel 6. Das Aussenrohr 4 bildet die Aussenwand des Entladungsgefässes 1 und begrenzt den Vakuummantel 6 gegenüber der Umwelt. An den Enden sind der Kühlmittelmantel 5 und der Vakuummantel 6 dadurch geschlossen, dass die Rohre 3 und 4 abgeschmolzen und mit dem Innenrohr 2 verbunden sind. Das langgestreckte Entladungsgefäss 1 ist in der nicht massstabgerechten Zeichnung der Deutlichkeit halber übertrieben dick dargestellt. Das innere Entladungsrohr 2 ist an seinen Enden mit Fenstern 7,8 für den Austritt der Laserstrahlung abgeschlossen. Diese Fenster sind zweckmässig unter dem Brewster'schen Winkel angeordnet, um nur linear polarisierte Strahlung reflexionsfrei durchzulassen. Durchführungen
9,10 durch das Aussenrohr 4 und das Zwischenrohr 3 verbinden das Innenrohr 2 mit der Aussenwelt. Mit ihrer Hilfe kann
das Entladungsgefäss mit gasförmigen, laseraktiven Medien unter entsprechenden niedrigen Drücken gefüllt werden.
Weitere Durchführungen 11 und 12 durch das Aussenrohr 4
münden in den Kühlmittelmantel 5. An den Enden des Entladungsraumes sind seitlich Elektroden 13,14 zum Zünden der
Gasentladung angeordnet.

Zum Ausgleich thermischer Spannungen ist die Aussenwand 4 des Vakuummantels 6 mit ringsum laufenden, elastisch deformierbaren Abschnitten 15,16 versehen.

Für den Betrieb eines Gasentladungslasers bei
tiefen Temperaturen wird der Kühlmittelmantel 5 mit einem
entsprechenden flüssigen Kühlmittel gefüllt. Mit verflüssigten Gasen wie flüssigem Stickstoff erreicht man beispielsweise eine Temperatur von 77 K. Das Kühlmittel kann
von einer geeigneten Kühlmittelquelle 17 geliefert sein
und in einem entsprechenden Kreislauf über die Durchführung
11, den Kühlmittelmantel 5 und die Durchführung 12 umlaufen.
Weil aber jetzt der Kühlmittelmantel 5 gegen die Umwelt
noch durch einen innen verspiegelten Vakuummantel 6 thermisch isoliert ist, bleibt der Verlust an Kühlmittel durch
Verdampfung minimal. Auch ohne Erneuerung im Kreislauf
reicht eine Kühlmittelfüllung für einen mehrstündigen Betrieb aus. Deshalb ist eine Betriebsweise des Lasers in
einem mindestens teilweise abgeschlossenen System jetzt
durchaus möglich.

Es ist verständlich, dass eine Abkühlung des Innenrohrs 2 und des Zwischenrohrs 3 (als innerer Trennwand
des Vakuummantels 6) auf 77 K eine Längenkontraktion dieser Rohre gegenüber dem mit der Umgebung auf Raumtemperatur in Verbindung stehenden Aussenrohr 4 bewirkt. Das verursacht erhebliche mechanische Spannungen, die ohne besondere Massnahmen mit Sicherheit zum Bruch des gläsernen Gefässes führen. Bei üblichen Dewar-Gefässen werden solche mechanischen Spannungen dadurch vermieden, dass die mit dem Kühlmittel, beispielsweise Helium, in Berührung stehende Innenwand nur einseitig am Rand mit der Aussenwand des Dewar-Gefässes verbunden ist, welche auf einem anderen Temperaturniveau liegt. Inneres und Ausseres des Gefässes können sich daher relativ zueinander ausdehnen. Anders ist es bei einem völlig geschlossenen Gefäss, dessen Wände mehrfach miteinander verbunden sind. Die Rohrenden sind sozusagen fest eingespannt. Deshalb muss für einem möglichen Längenausgleich durch deformierbare Abschnitte mindestens einer Wand gesorgt werden. Diese ist zweckmässig die Aussenwand des Vakuummantels. Balgenartige Ringzonen 15, 16 sorgen daher für den Längenausgleich, damit sich keine gefährlichen Spannungen aufbauen können.

Stark verdünnte Gase werden als gasförmiges laseraktives Medium dem Entladungsgefäss 1 von geeigneten regelbaren Gasquellen 18,19,20 zugeführt. Diese Gase werden beispielsweise unter entsprechend geringen Drücken durch die Durchführung 9 in das Entladungsrohr 2 eingeleitet, durchströmen langsam den Entladungsraum und werden durch eine geeignete Vakuumpumpe 21 über die Durchführung 10 abgeführt. Die erste Gasquelle 18 mag beispielsweise ein Edelgas wie Helium oder Neon liefern. Ein durch elektrische Entladung anregbares Molekulargas wie $CO_2$ oder CO wird durch eine zweite Gasquelle 19 geliefert. Weitere gasförmige Zusätze wie Stickstoff, Sauerstoff oder einfach Luft werden durch eine dritte Gasquelle 20 zugesetzt.

Zum Anregen der Gasentladung ist eine Hochspannungsquelle 22 vorgesehen, die über nicht dargestellte Schalteinrichtungen mit den Elektroden 13, 14 verbunden ist. Die Gasentladung wird längs der Rohrachse des Entladungsraumes angeregt. Damit die Laserstrahlung nicht gestört wird, befinden sich die Elektroden in seitlichen Ansätzen des Innenrohres 2. Die Hochspannungsquelle kann Wechselströme oder Gleichströme liefern. Auch Hochfrequenzanregung ist möglich, wenn die Hochspannungsquelle 22 einen geeigneten starken Sender enthält. Am einfachsten erfolgt der Betrieb jedoch mit impulsförmiger Anregung. Als Impulsgeneratoren stehen beispielsweise die wohlfeilen, in der Automobiltechnik üblichen Zündspulen zur Verfügung, die in Schaltungen mit Kondensatoren leicht regelbare Anordnungen zu bilden vermögen.

Im angeregten Gas wird die Emission von Strahlung stimuliert. Im geeignet abgestimmten optischen Resonator wird die Strahlung regenerativ verstärkt und führt zu Laser-Oszillationen. Die ausserhalb des Entladungsgefässes vorhandenen optischen Einrichtungen, wie die Endreflektoren der Kavität und allfällige Abstimmittel, sind nicht in der Zeichnung dargestellt. Beispielsweise können regelbare dispersive Einrichtungen zur Abstimmung vorgesehen sein. Auch andere in der Lasertechnik gebräuchliche optische Hilfsmittel wie Modenblenden oder Güteschalter können vorhanden sein.

Eine besonders günstige Form von Federelementen ist im Schnitt durch den Vakuummantel 6 in der Fig. 2 dargestellt. Eine Gruppe von beispielsweise drei gläsernen Rohrfederelementen 23 umgibt ringförmig das zylindrische Mantelrohr des Entladungsgefässes in achsensenkrechten Ebenen. Jedes Rohrfederelement 23 besteht aus einem zur Achse des Entladungsgefässes hin aufgeschlitzen Torus, dessen

0009604

SZ 9-78-004

Ränder mit den Rändern der angrenzenden zylindrischen Abschnitte des Aussenrohres 4 verbunden sind. Der Aussendurchmesser eines solchen Rohrfederelementes in der Form eines Toroides ist vorzugsweise 30% bis 40% grösser als der Aussendurchmesser des zylindrischen Mantelrohrs. Nach innen kommuniziert der Innenraum der Federelemente mit dem Vakuummantel 6, dessen innere Begrenzung gegen den Kühlmittelmantel durch das Zwischenrohr 3 gebildet wird. Die Innenflächen des Vakuummantels 6 sind vorzugsweise verspiegelt, z.B. durch eine Silberschicht 24. Diese reflektierende Schicht ist durchgehend auf allen Innenflächen des Vakuummantels angeordnet, einschliesslich der Innenräume der Federelemente. An mindestens einer Stelle des Entladungsgefässes lässt man jedoch zweckmässig einen Sichtstreifen übrig, der nicht verspiegelt ist. So kann man beispielsweise den Füllungsgrad des Kühlmittelmantels durch diese Sichtöffnung erkennen.

Belastungsversuche mit ausgeführten gläsernen Federelementen der dargestellten Form zeigen eine praktisch lineare Federcharakteristik. Wenn die Abmessungen der Elemente in den angegebenen Grenzwerten bleiben, können die beim Betrieb des Lasers auftretenden thermischen Spannungen im Entladungsgefäss durch die elastische Deformation des Aussenmantels sicher unterhalb der Bruchgrenze gehalten werden. Federelemente mit geringeren Aussendurchmessern erwiesen sich als weniger günstig. Man ordnet zweckmässig die gläsernen Federelemente in Gruppen an. Je nach Länge des Entladungsgefässes genügen zwei bis sechs solche Gruppen. Das Ausführungbeispiel nach Fig. 1 besitzt zwei elastisch deformierbare Ringzonen. Das im folgenden beschriebene Ausführungsbeispiel besitzt vier Gruppen von je drei Federelementen. Diese vier Gruppen können 1 mm Längendifferenz bei einer Belastung von etwa 200 Newton ausgleichen, ohne zu Bruch zu gehen. Die Längenkontraktion des Innenrohrs 3 bei 77 K, der Temperatur des flüssigen Stickstoffs, beträgt bei dem Ausführungsbeispiel des Entladungsgefässes etwa 0,5 mm. Die dadurch bedingten thermischen Spannungen können deshalb sicher ausgeglichen werden.

Das anodenseitige Ende des im weiteren beschriebenen Ausführungsbeispiels ist in Schnittdarstellung in der Fig. 3 gezeigt. Es handelt sich um ein Entladungsgefäss für einen CO-Laser mit zwei hintereinander liegenden Entladungsstrecken. Man erkennt den Vakuummantel 6, der den Kühlmittelmantel 5 umschliesst. Eine Gruppe von Rohrfederelementen 23 ist gerade angeschnitten. Der Vakuummantel 6 wird nach dem Einbringen der die Strahlungsverluste vermindernden reflektierenden Innenschicht mittels eines Pumpstutzens 25 evakuiert, der danach abgeschmolzen wird. Zum Abschluss sowohl des Vakuummantels 6 als auch des Kühlmittelmantels 5 sind das Aussenrohr 4 und das Zwischenrohr 3 halbrund abgeschmolzen und dicht mit dem Innenrohr 2 verbunden. Eine zylinderförmige Anode 26 befindet sich im noch vom Kühlmittelmantel 5 umschlossenen Teil des Innenrohrs 2. Jede Anode ist aus einem geeigneten Material wie beispielsweise Chromstahl hergestellt und wird gegen einen Wulst 27 des Innenrohrs 2 mittels eines Zuführungsdrahtes 28 gehalten. Ein Seitenarm 29 des Innenrohrs 2 ist mit einer Glas- Metalldurchführung 30 abgeschlossen.

Ein Metallstift 31, beispielsweise aus Wolfram, dient für den Anschluss der Hochspannung. Der Zuführungsdraht 28 der Anode 26 ist mit dem Metallstift 31 verbunden. Das Innenrohr 2 endet im Aussenteil 32 einer trennbaren Kugelschliffverbindung, durch welche die Anode 26 zugänglich ist. Das Einsatzstück 33 der Kugelschliffverbindung trägt ein kurzes Rohrstück 34 mit einem unter dem Brewster'schen Winkel aufgekitteten Fenster 35. Das Brewster-Fenster 35 besteht aus einem für die ultrarote Laserstrahlung durchlässigen Material wie Calciumfluorid ( $CaF_2$ ). Da die Schliffverbindung keine gewöhnliche konisch eingeschliffene Verbindung ist, sondern eine sphärisch eingeschliffene, erlaubt sie eine gewisse Winkeleinstellung. Es ist damit auch eine Feineinstellung des Brewster-Fensters für die Justierung der ausgekoppelten Laserstrahlung möglich. Die Schliffverbindung dient daher mehreren Zwecken. Sie erlaubt sowohl die Reinigung oder den Ersatz einer verbrauchten Anode als auch die optische Feineinstellung des Auskoppelfensters.

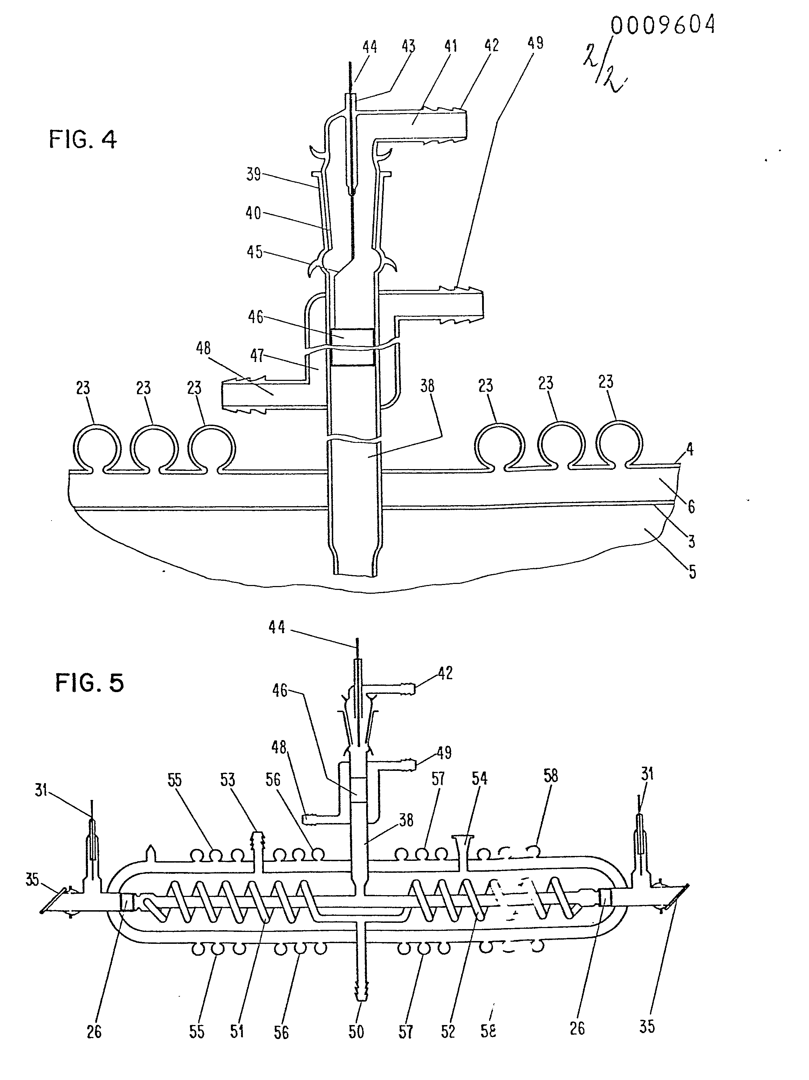

In der Fig. 3 ist auch ein Teil einer zusätzlichen Einrichtung des Entladungsgefässes zu erkennen, nämlich eines Gasvorkühlers. Eine Rohrschlange 36 windet sich um das Innenrohr 2 innerhalb des Kühlmittelmantels 5 und mündet durch eine Oeffnung 37 nahe der Anode 26 in das Innenrohr 2. Bei diesem zweiten Ausführungsbeispiel eines Entladungsgefässes befinden sich nämlich die Kathode und die seitlichen Gasdurchführungen in der Mitte des Gefässes. Wie genauer aus der Fig. 5 ersichtlich ist, strömt das Gas in der Mitte ein, verteilt sich auf beide Hälften des Gasvorkühlers und verlässt das Innenrohr durch eine andere seitliche Durchführung, die auch die zentrale Kathode enthält.

Die Fig. 4 zeigt einen Ausschnitt aus der Mitte des Entladungsgefässes mit der Durchführung durch den Vakuummantel, die in dem daran anschliessenden Seitenarm die wasserkühlbare Kathode und den Gasaustritt enthält. Man erkennt das Aussenrohr 4 des Entladungsgefässes mit zwei Gruppen von Rohrfederelementen 23 sowie das Zwischenrohr 3, das die Trennwand zwischen dem Vakuummantel 6 und dem Kühlmittelmantel 5 bildet. Die seitliche Durchführung 38 durchsetzt beide Rohre 4 und 3. Die in der Fig. 4 abgebrochen gezeichnete, nach innen gerichtete Verlängerung mündet seitlich in das Innenrohr 2 ein, wie aus der Uebersichtszeichnung der Fig. 5 zu erkennen ist. Auf der Aussenseite des Entladungsgefässes endet die Durchführung 38 im Aussenteil 39 einer konischen Schliffverbindung. Der Einsatzteil 40 der Schliffverbindung geht in einem Rohrkrümmer 41 mit dem Gasauslass
42 über. Hier kann beispielsweise mit einer Schlauchverbindung eine Vakuumpumpe 21 angeschlossen sein.

In Verlängerung der Achse der Schliffverbindung
enthält die Wand des Rohrkrümmers 41 eine Glas- Metalldurchführung 43 mit einem Metallstift 44, an den mit einem
Zuleitungsdraht 45 eine als Kathode für beide Entladungsstrecken dienende zentrale Elektrode 46 angeschlossen ist.
Auch hier ist die Elektrode für die Wartung des Entladungsgefässes durch eine Schliffverbindung bequem zugänglich.

Die seitliche Durchführung 38 ist zweckmässig am
Ort der Kathode 46 von einem Kühlmantel 47 umgeben, der von
einem flüssigen Kühlmittel wie beispielsweise Wasser durchströmt wird. Für das Kühlmittel sind am Kühlmantel 47 zwei
Anschlüsse 48 und 49 vorgesehen.

Die Fig. 5 zeigt eine Gesamtübersicht über das
Entladungsgefäss. Das innere Entladungsrohr ist mit einem
Kühlmittelmantel umgeben, der auch den spiralförmigen Gasvorkühler enthält. Der Kühlmittelmantel erstreckt sich praktisch über die gesamte Länge des Entladungsrohrs. Nur die
Auskoppelfenster 35 und die Anschlüsse 31 für die äusseren
Elektroden (Anoden 26) befinden sich ausserhalb des Kühlmittelmantels. Nach aussen ist der Kühlmittelmantel durch
den Vakuummantel thermisch isoliert. Zentral am Gefäss
sind zwei den Vakuummantel durchsetzende Durchführungen
angeordnet. Von unten mündet der Gaseinlass 50 ein, der
sich in die beiden Hälften 51 und 52 des Gasvorkühlers verzweigt. Die Rohrschlangen des Gasvorkühlers winden sich um
das innere Entladungsrohr und münden nahe den Enden in das
Innenrohr ein, wie es im einzelnen anhand der Fig.3 beschrieben ist. Weitere Durchführungen für Anschlüsse der

0009604

Versorgung des Lasers befinden sich auf der Oberseite des Entladungsgefässes, jeweils in der Mitte einer Hälfte des Gefässes. Links ist der Anschluss 53 für den Einlass des Kühlmittels eingezeichnet. Rechts befindet sich der Anschluss 5' für den Auslass des Kühlmittels. Je nach Verwendungszweck können diese Anschlüsse ausgestaltet sein. Beispielsweise ist der Anschluss 53 als für eine Schlauchverbindung geeignet dargestellt. Andererseits ist der Anschluss 54 ein Beispiel für eine Ausführungsform einer einfachen Einfüllöffnung oder Auslassöffnung. Diese kann gegebenenfalls mit einem Verschluss versehen sein. An der Oberseite des Entladungsgefässes befindet sich in der Mitte die seitliche Durchführung 38 mit dem Gasauslass 42 und dem Anschluss 44 für die zentrale Elektrode 46. Einzelheiten dieser Bauelemente sind oben anhand der Fig. 4 näher beschrieben. Zum Kühlen der Kathode 46 ist ein Kühlmantel vorgesehen, der über die Anschlüsse 48 und 49 an einen entsprechenden Kühlkreislauf anschliessbar ist.

Zum Ausgleich der thermischen Spannungen infolge der Temperaturdifferenzen auf beiden Seiten des Vakuummantels ist die Aussenwand des Gefässes mit elastisch deformierbaren Abschnitten versehen. Diese Abschnitte befinden sich zweckmässig als Gruppen von Federelementen zwischen den Durchführungen : für das Innenrohr bzw. für Anschlüsse der Versorgung des Lasers mit Betriebsmitteln. Eine erste Gruppe von Federelementen 55 befindet sich beispielsweise im linken Abschnitt des Entladungsgefässes zwischen dem Ende und dem Anschluss 53 für die Versorgung des Lasers mit flüssigem Kühlmittel. Eine zweite Gruppe 56 von Federelementen befindet sich zwischen dem Anschluss 53 und den zentralen seitlichen Durchführungen 38 und 50. Eine dritte Gruppe 57 von Federelementen ist in der rechten Hälfte des Entladungsgefässes zwischen den zentralen seitlichen Durchführungen 38, 50 und dem Anschluss 54 für das Kühlmittel angeordnet. Eine vierte Gruppe 58 von Federelementen folgt in dem äusseren rechten Abschnitt zwischen dem Anschluss 54 und dem Ende des Gefässes. Auf eine Länge des Entladungsgefässes von etwa 1 m können die vier Gruppen von Federelementen eine Längenänderung von mindestens 1 mm ausgleichen, d.h. 0,1%. Die im Betrieb des Lasers wirklich auftretende Kontraktion liegt in der Grössenordnung von 0,5 mm. Die dadurch bedingten thermischen Spannungen können also leicht ausgeglichen werden.

Ein ausgeführtes Beispiel eines Entladungsgefässes hatte folgende Abmessungen. Die Länge des Gefässes betrug zwischen den Auskoppelfenstern 1,25 m. Jede der beiden Entladungsstrecken war 48 cm lang. Die Wandstärke der Rohre betrug 1,5 mm. Der Aussendurchmesser des äusseren Mantels betrug 92 mm, der Aussendurchmesser der Rohrfederelemente 125 mm. Der Torusdurchmesser der Rohrfederelemente betrug 15 mm. Der Aussendurchmesser des Zwischenrohres betrug 71 mm, der des Innenrohres 15 mm. Der Gasvorkühler innerhalb des Kühlmittelmantels war aus Glasrohr mit 10 mm Aussendurchmesser hergestellt. Der Aussendurchmesser der Glasspirale betrug 55 mm. Jede der beiden Rohrschlangen enthielt 13 Windungen.

Dieses Entladungsgefäss wird für einen CO-Laser verwendet, dessen Ausgangsstrahlung im Bereich von 5 $\mu$m liegt. Zur Stromversorgung dienen zwei Zündspulen, die mit Kondensatoren zusammengeschaltet sind. Die Ladespannung der Kondensatoren beträgt 200 bis 300 V, der maximale Ladestrom 350 mA. Die mögliche maximale Impulswiederholungsfrequenz hängt von der Kapazität der Kondensatoren ab. Sie beträgt 320 Hz bei 4 $\mu$F, 160 Hz bei 8 $\mu$F und 80 Hz bei 16 $\mu$F. Die Impulsdauer einer Entladung beträgt etwa 1 ms. Die Impulslänge der optischen Impulse beträgt etwa 500 $\mu$s. Die Spitzenleistung dieser Impulse liegt bei etwa 100 W. Der optische Resonator ist etwa 1,45 m lang.

Als laseraktive Medien werden beispielsweise für den genannten CO-Laser folgende Gase und Drücke verwendet: 13 Torr Helium, 0,4 Torr Kohlenmonoxid und 0,3 Torr Luft. Die anregbaren Spektrallinien liegen hauptsächlich im Gebiet des P-Zweiges der Schwingungsübergänge zum Grundzustand. Es wurden beispielsweise beobachtet 18-17 P (14), 18-17 P (10), 17-16 P (13), 16-15 P (15), 16-15 P (11), 15-14 P (13), 15-14 P (8) u.s.w. Auch Uebergänge höherer Wellenzahlen können angeregt werden wie beispielsweise 9-8 P (12) oder 6-5 P (14). Der genannte Laser ist eine leistungsfähige Strahlungsquelle im verhältnismässig nahen ultraroten Bereich. Das erfindungsgemässe Entladungsgefäss hat sich für diesen Zweck als sehr brauchbar erwiesen.

PATENTANSPRUECHE

1.      Gläsernes Entladungsgefäss für einen bei tiefen Temperaturen arbeitenden Gaslaser, mit einem inneren Entladungsrohr und mit einem umgebenden Kühlmittelmantel, mit Fenstern zum Durchtritt der Laserstrahlung, sowie mit seitlichen Durchführungen für Anschlüsse der Versorgung des Lasers mit gasförmigen laseraktiven Medien, mit flüssigen Kühlmitteln und mit elektrischer Energie, dadurch gekennzeichnet, dass der Kühlmittelmantel (5) mit einem thermisch isolierenden Vakuummantel (6) umgeben ist und dass die äussere gläserne Wand (4) des Vakuummantels (6) mit elastisch deformierbaren Abschnitten (15, 16) zum Ausgleich thermischer Spannungen versehen ist.

2.      Entladungsgefäss nach Anspruch 1, dadurch gekennzeichnet, dass die elastisch deformierbaren Abschnitte (15, 16) der Aussenwand (4) des Vakuummantels (6) mit Federelementen (23) aus gläsernen Rohrfedern gebildet sind, die ringförmig das zylindrische Mantelrohr in achsensenkrechten Ebenen umgeben.

3.      Entladungsgefäss nach Anspruch 2, dadurch gekennzeichnet, dass jedes Rohrfederelement (23) aus einem zur Achse hin geschlitzten Torus besteht, und dass die Ränder des aufgeschlitzten Torus mit den Rändern der angrenzenden zylindrischen Abschnitte des Mantelrohrs (4) verbunden sind.

4.      Entladungsgefäss nach Anspruch 3, dadurch gekennzeichnet, dass der Aussendurchmesser eines Rohrfederelementes (23) 30% bis 40% grösser als der Aussendurchmesser des Mantelrohrs (4) ist.

0009604

5. Entladungsgefäss nach Anspruch 1, dadurch gekennzeichnet, dass ein elastisch deformierbarer Abschnitt (15, 16) der Aussenwand (4) des Vakuummantels (6) eine Gruppe von mehreren benachbarten Federelementen (23) umfasst.

6. Entladungsgefäss nach Anspruch 5, dadurch gekennzeichnet, dass zwischen je zwei Durchführungen ( 2, 53, 38, 54, 2 ) des Gefässes (1) jeweils eine Gruppe (55, 56, 57, 58) von Federelementen (23) vorgesehen ist.

7. Entladungsgefäss nach Anspruch 1, dadurch gekennzeichnet, dass die Innenwände des Vakuummantels (6) einschliesslich des Inneren der Federelemente (23) verspiegelt sind.

8. Entladungsgefäss nach Anspruch 7, dadurch gekennzeichnet, dass mindestens ein nicht verspiegelter Sichtstreifen zum Erkennen des Füllungsgrades des Kühlmittelmantels vorgesehen ist.

9. Entladungsgefäss nach Anspruch 1, dadurch gekennzeichnet, dass das innere Entladungsrohr (2) für zwei hintereinander liegende Gasentladungen mit einer zentralen Elektrode (46) und mit an den Enden befindlichen Gegenelektroden (26) vorgesehen ist.

10. Entladungsgefäss nach Anspruch 1, dadurch gekennzeichnet, dass das innere Entladungsrohr (2) an beiden Enden mit einer Kugelschliffverbindung (32, 33) versehen ist, welche den Zugang zu der im gekühlten Teil des Entladungsgefässes befindlichen Elektrode (26) ermöglicht.

0009604

11. Entladungsgefäss nach Anspruch 10, dadurch gekennzeichnet, dass das Einsatzstück (33) jeder Kugelschliffverbindung ein Rohrende (34) mit einem für die Laserstrahlung durchlässigen Brewster-Fenster (35) enthält.

12. Entladungsgefäss nach Anspruch 1, dadurch gekennzeichnet, dass eine erste in der Mitte einmündende seitliche Durchführung (38) für einen Anschluss (42) des inneren Entladungsrohres (2) an eine Vakuumpumpe (21) vorhanden ist.

13. Entladungsgefäss nach Anspruch 12, dadurch gekennzeichnet, dass die genannte Durchführung (38) mit einer Schliffverbindung (39, 40) ausgestattet ist, welche den Einsatz einer zentralen Elektrode (46) ermöglicht.

14. Entladungsgefäss nach Anspruch 13, dadurch gekennzeichnet, dass die genannte Durchführung (38) am Ort der zentralen Elektrode (46) mit einem eigenen Kühlmantel (47) versehen ist.

15. Entladungsgefäss nach Anspruch 1, dadurch gekennzeichnet, dass eine zweite, in der Mitte einmündende seitliche Durchführung (50) für einen Anschluss des inneren Entladungsrohrs (2) an mindestens eine Gasquelle (18, 19, 20) vorhanden ist, und dass innerhalb des Kühlmittelmantels (5) die Gaszuleitung (50) sich in zwei das innere Entladungsrohr (2) spiralig umgebende Vorkühlschlangen (51, 52) verzweigt, die an den Enden in das innere Entladungsrohr seitlich (37) einmünden.

16. Entladungsgefäss nach Anspruch 1, dadurch gekennzeichnet, dass mindestens eine seitliche Durchführung (53, 54) mit einem Anschluss an den Kühlmittelmantel (5) zum Einfüllen oder Durchleiten eines flüssigen Kühlmittels vorgesehen ist.

FIG. 1

FIG. 2

FIG. 3

FIG. 4

FIG. 5